# EUROPEAN PATENT APPLICATION

(11) **EP 4 428 781 A1**
(43) Date of publication of application: **11.09.2024**
(21) Application number: 22889646.0
(22) Date of filing: 31.08.2022
(51) Int. Cl.: G06Q 10/06, G06Q 50/10

(54) **TASK DESIGN ASSISTANCE SYSTEM AND TASK DESIGN ASSISTANCE METHOD**

(30) Priority: 02.11.2021 JP 2021179177
(71) Applicant: Hitachi, Ltd., Tokyo 100-8280 (JP)
(72) Inventor: WATANABE Junya, Tokyo 100-8280 (JP); KONO Toshiaki, Tokyo 100-8280 (JP)
(74) Representative: Mewburn Ellis LLP
(86) International application number: PCT/JP2022/032717
(87) International publication number: WO 2023/079821

(57) **Abstract**

A task design assistance system 100 comprises a task plan scenario setting unit 101b that generates a scenario indicating the contents of a task plan, a simulation unit 104 that executes simulation for the scenario, a KPI calculation unit 106 that calculates an evaluation indicator on the basis of a result of the simulation, and a sensitivity evaluation unit 107 that calculates a sensitivity of the evaluation indicator at the time when a condition parameter of simulation is changed, and the task design assistance system 100 presents the evaluation indicator and the sensitivity for the scenario. In this manner, the present invention provides a task design assistance system and a task design assistance method that achieve selection of a resilient task plan robust against various environmental changes.

## Description

### Technical Field

The present invention relates to a task design assistance system and a task design assistance method that assist design and improvement of various tasks such as a maintenance task.

### Background Art

PTL 1 discloses a plan searching device "that selects an action based on a value function representing a value of an action for a state of a target environment, simulates a state transition of the target environment by applying the selected action, acquires a state of the target environment after the transition and a reward for the applied action indicated by a first index, executes an episode in which a series of processes until the value function is updated based on the state and the reward is repeated a plurality of times, accumulates an episode in which a second index satisfies a predetermined condition, improves the value function based on the accumulated episode, repeats a series of processes from execution of the episode to improvement of the value function until a predetermined end condition is satisfied, and presenting a plan determined based on the obtained value function".

### Citation List

### Patent Literature

PTL 1: JP 2019-219981 A

### Summary of Invention

### Technical Problem

In recent years, a task environment has rapidly changed, and there is a demand for review and improvement of a task design according to the task environment in various industries. For example, in a maintenance task of infrastructure, railway, industrial equipment, medical equipment, and the like, it is necessary to continuously perform maintenance such as inspection and repair for safe and stable operation of assets (facilities).

In such maintenance, an organization system, work criteria, and the like are designed in consideration of an operation status and an operation characteristic of an asset, a maintenance resource status of a worker, a tool, and the like. However, when the task environment changes, it is necessary to take some operation plans and review a maintenance task design suitable for the environment.

In addition, in recent years, various values such as environment, resilience, and human rights have been emphasized, and there is also a demand for a shift from task design focusing on economy and cost in the related art. Therefore, PTL 1 discloses a technique for searching for suitable plans according to a situation in an environment in which various indexes exist.

In recent years, various values such as environment, resilience, and human rights are also emphasized in business. In particular, exposure to unexpected environmental changes such as natural disasters and diseases is increased, and resilient ("recovery power" and "elasticity") task design capable of responding flexibly and resiliently to various changes is emphasized.

PTL 1 described above discloses a method for searching for suitable task plans satisfying a plurality of evaluation indexes, but a change amount (sensitivity) such as how much an evaluation index (referred to as "KPI" (Key Performance Indicators) below) changes when an environmental factor changes.

On the other hand, if the resilience of the searched task plan can be ascertained, it can contribute to more resilient task design, and thus there is room for improvement.

An object of the present invention is to provide a task design assistance system and a task design assistance method that enable selection of a robust task plan having robustness against various environmental changes.

### Solution to Problem

The present invention includes a plurality of means for solving the above problems. As an example, the present invention includes a task plan scenario setting unit that generates a scenario indicating a content of a task plan, a simulation unit that simulates the scenario, an evaluation index calculation unit that calculates an evaluation index based on a result of the simulation, and a sensitivity evaluation unit that calculates a sensitivity of the evaluation index when a condition parameter of the simulation is changed. The evaluation index and the sensitivity for the scenario are presented.

### Advantageous Effects of Invention

According to the present invention, it is possible to select a robust task plan that has robustness against various environmental changes. Objects, configurations, and effects other than those described above will be clarified by the descriptions of the following embodiments.

### Brief Description of Drawings

[FIG. 1] FIG. 1 is a functional block diagram of a task design assistance system according to Embodiment 1.
[FIG. 2] FIG. 2 is an example of a task plan scenario setting screen according to Embodiment 1.
[FIG. 3] FIG. 3 is an example of a sensitivity parameter setting screen according to Embodiment 1.
[FIG. 4] FIG. 4 is an example of a KPI item setting screen according to Embodiment 1.
[FIG. 5] FIG. 5 is an example of a result display screen according to Embodiment 1.
[FIG. 6] FIG. 6 is a functional block diagram of a task design assistance system according to Embodiment 2.
[FIG. 7] FIG. 7 is a functional block diagram of a task design assistance system according to Embodiment 3.
[FIG. 8] FIG. 8 is a functional block diagram of a task design assistance system according to Embodiment 4.
[FIG. 9] FIG. 9 is an example of a KPI rank setting screen according to Embodiment 4.

### Description of Embodiments

Hereinafter, embodiments of a task design assistance system and a task design assistance method according to the present invention will be described with reference to the drawings.

Note that, in each embodiment, a maintenance task will be described as an example of the task, but the present invention is not limited thereto. A task design assistance system and a task design assistance method in each embodiment can also be applied to a service industry such as a financial industry and a transportation industry, a manufacturing industry such as a chemical industry and an automobile industry, agriculture, and the like.

In addition, all tasks include various types of work such as inspection, repair, and maintenance, and assets as a target of maintenance tasks include various articles such as facilities, devices, machines, and products.

Further, in the drawings used in the present specification, the same or corresponding components are denoted by the same or similar reference signs, and repeated description of the components may be omitted.

### <Embodiment 1>

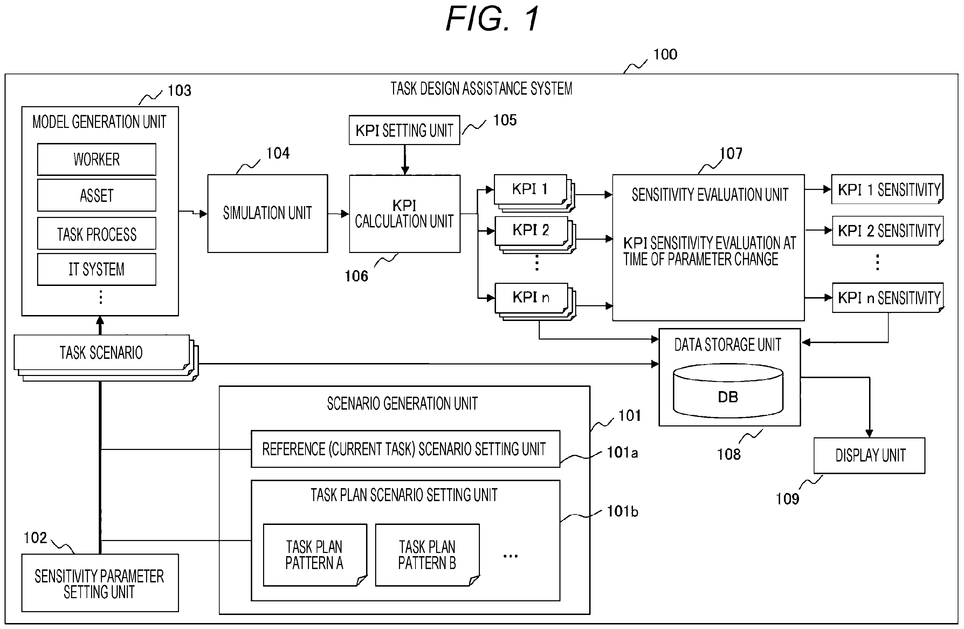

A task design assistance system and a task design assistance method according to Embodiment 1 of the present invention will be described with reference to FIGS. 1 to 5.

Firstly, the overall configuration of the task design assistance system will be described with reference to FIG. 1. FIG. 1 is a functional block diagram of a task design assistance system according to Embodiment 1.

As illustrated in FIG. 1, a task design assistance system 100 according to Embodiment 1 includes a scenario generation unit 101, a sensitivity parameter setting unit 102, a model generation unit 103, a simulation unit 104, a KPI setting unit 105, a KPI calculation unit 106, a sensitivity evaluation unit 107, a data storage unit 108, and a display unit 109.

The task design assistance system 100 can be implemented in a manner that a general information processing apparatus processes software, and is preferably configured by a computer or the like. The computer constituting the task design assistance system includes a CPU, a memory, an interface, the display unit 109 such as a display that presents a processing result and the like to a user, an input device such as a keyboard and a mouse that receives an input from the user, the data storage unit 108 including a recording device such as an SSD and an HDD, and the like. Operation control of each device, various types of arithmetic processing which will be described later, and the like are performed based on various programs. These programs are stored in the internal data storage unit 108, an external recording medium, a data server (all not illustrated), or the like, and can be read and executed by the CPU.

Note that control processing may be integrated into one program, may be divided into a plurality of programs, or may be a combination thereof. In addition, a portion or the entirety of the program may be implemented by dedicated hardware or may be modularized. Furthermore, the various programs may be installed from a program distribution server, an internal storage medium, or an external recording medium.

The scenario generation unit 101 is a unit that generates a scenario that defines the state and conditions of a target task, and includes a reference scenario setting unit 101a and a task plan scenario setting unit 101b.

A scenario generated by the scenario generation unit 101 includes various types of information such as information of personnel and organizations that execute tasks, information of assets related to tasks, information of a system that constructs tasks, and information of task processes related to task execution rules. For example, when a maintenance task is set as a target, the information is as follows.

The information of personnel and organizations that execute tasks includes information of an organization structure of a maintenance company, the number and location of service bases that perform maintenance, the number and skill of maintenance workers, tasks and assets in charge, working hours, and the like.

The information of the assets related to tasks includes information such as the type and model of the asset, a function, a constituent element, a causal relationship between constituent elements, a failure mode, a failure occurrence rate for each failure mode, the number of installations, an installation location, and an operation time. In addition, asset information also includes information such as the type and model of a component as the constituent element, the number of inventories, a production frequency, and a production time.

The information of the system that constructs tasks includes an asset management system, a task management system, a task log system, a sensor, a state monitoring system, IoT technologies of predictive diagnosis, remote diagnosis, and the like, and includes information such as performance, an introduction cost, an operation cost, and a range of assets and organizations to be applied.

The information of task processes related to task execution rules includes information such as a task classification such as inspection and repair, a work occurrence frequency, a work time, a skill required for work, a tool required for work, a cost required for work, and a movement time.

Note that the various types of information included in the above scenario are time-series information including not only the current state of the maintenance task but also a past state and a virtual state assumed in the future.

In addition, it is assumed that the scenario generated by the scenario generation unit 101 does not matter whether the maintenance task is in a virtual state or a realistic state.

The scenario in the realistic state can be set based on design information and the past history. For example, actual asset information or component information in reality can be set based on information such as an asset management system (EAM), an asset design specification, durability test data, failure log data, event log data, failure mode and effect analysis (FMEA), and fault tree analysis (FTA). The information of the actual maintenance work can be set based on work log data in which a work start time, a work end time, a work content, a worker name, a use tool, necessary qualification, and the like are recorded. By generating such a scenario in the realistic state, it is possible to perform a simulation that accurately reproduces the actual maintenance task.

In addition, the scenario may be a virtual scenario that has not actually occurred. For example, in a case where three maintenance staffs are scheduled to be retired, and a virtual scenario in which three maintenance staffs are reduced from the current personnel is generated as the scenario, a simulation for predicting the maintenance task that can occur in the future after the retirement of three maintenance staffs can be performed.

The reference scenario setting unit 101a sets a scenario of a maintenance task state in the reality by the method as described above.

The task plan scenario setting unit 101b selects and sets a task plan scenario showing the content of a task plan that can be taken for the current state among task plan patterns prepared in advance. The task plan scenario setting unit 101b is preferably an execution entity of a task plan scenario setting step.

Examples of the task plan pattern include an IoT plan for newly introducing an IoT solution such as predictive diagnosis, repair recommendation, and remote diagnosis, an organization change plan for changing the number and position of service bases and the number of workers in each service base, and a maintenance policy change plan for changing a periodic inspection cycle, a component replacement cycle, and the like. In addition, a combined plan obtained by combining a plurality of task plan patterns can also be regarded as one plan.

Here, the "plan" in the present invention means to change a parameter of information that can be intentionally changed among various types of information included in the scenario. For example, it can be said that a maintenance staff increase plan means change of the number of maintenance staffs to an increased value, and an IoT introduction plan means change of the number of IoT technologies such as predictive diagnosis to an increased value.

Note that the change includes a change to the same value, and can be said to be a current state maintaining plan for continuing the state of the maintenance task at a certain time. In addition, the number of items to be changed is not limited to one, and a plurality of items may be changed at the same time.

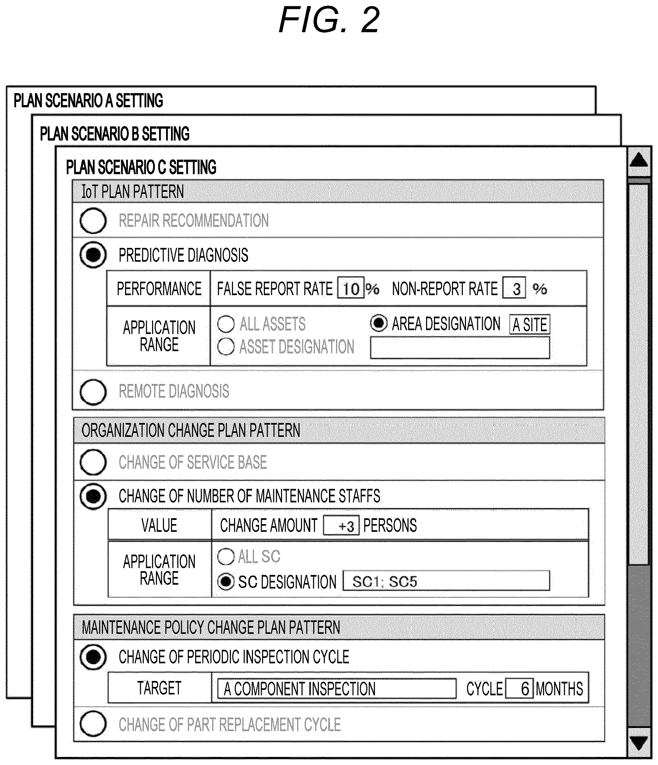

FIG. 2 illustrates an example of a task plan scenario setting screen. In the example of FIG. 2, three different task plan scenario screens of plan scenarios A, B, and C are opened, and different plan settings are set.

In the example of FIG. 2, as the setting of the plan scenario C, the predictive diagnosis is selected as the IoT plan pattern, and a false report rate of 10% and a non-report rate of 3% are input as performance values which are condition parameters. In addition, as an application range to which the predictive diagnosis is applied, designation in units of areas is selected, and application of the predictive diagnosis to an asset of the A site is designated.

In addition, the change of the number of maintenance staffs is selected as the organization change plan pattern, and the number of changed people is input as +3 as the condition parameter. In addition, regarding the range of the service bases to be changed, designation in units of SCs is selected, and SC1 and SC5 are designated.

Further, the change of the periodic inspection cycle is selected as the maintenance policy change plan pattern, the target is designated as the A component inspection as the condition parameter, and the cycle is input as six months. That is, the plan scenario C in FIG. 2 is an example of a task plan scenario in which three plan patterns are combined.

When the task plan scenario set by the task plan scenario setting unit 101b is added to the scenario conforming to the current task set by the reference scenario setting unit 101a, a virtual task scenario when the assumed task plan has been performed can be generated. The scenario generation unit 101 sets a plurality of task plan scenarios and generates a plurality of virtual task scenarios.

The sensitivity parameter setting unit 102 sets a condition parameter to be caused to fluctuate and a fluctuation range thereof among condition parameters of various types of information included in the task scenario generated by the scenario generation unit 101, and generates a task scenario when the condition parameter fluctuates with respect to the assumed task scenario.

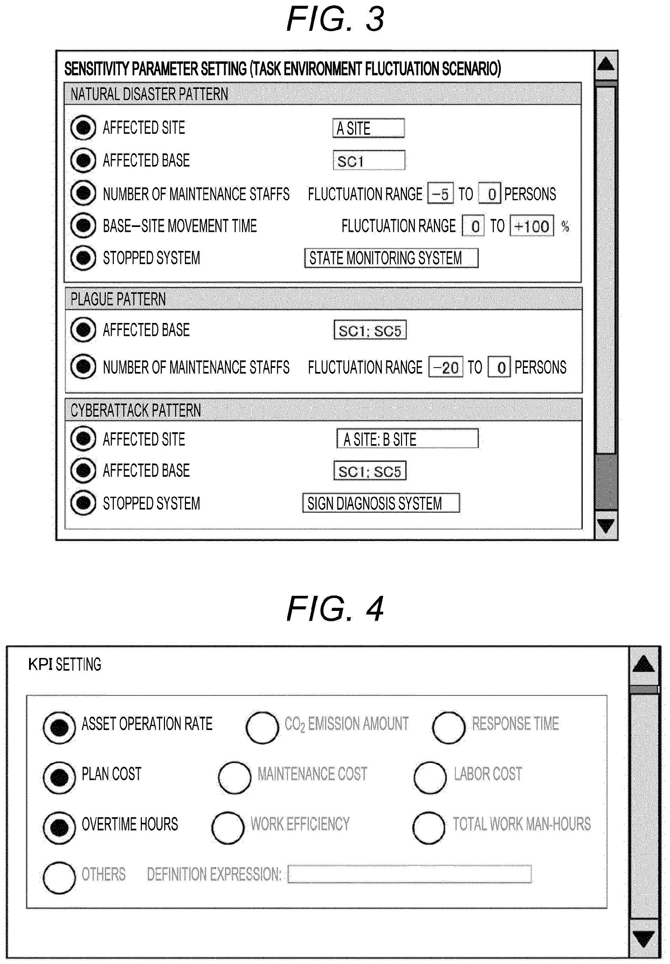

FIG. 3 is an example of a sensitivity parameter setting screen. In the example of FIG. 3, a natural disaster pattern, a plague pattern, and a cyber-attack pattern are assumed as external factor patterns affecting a task environment.

For example, in the natural disaster pattern, as the affecting condition parameter, the affected site is designated as the A site, SC1 is designated as the affected base, the fluctuation range of the number of maintenance staff is designated as -5 to 0, the fluctuation range of the base-site movement time is designated as 0 to +100%, and the state monitoring system is designated as a stop system. This is a condition setting assuming a situation in which the asset of the A site is simultaneously stopped due to a natural disaster such as a typhoon, the maximum of five maintenance staffs enter a task incapacity state in the service base of SC1, the base-site movement time is doubled at maximum, and the state monitoring system is stopped. Note that these plurality of condition parameters may be caused to fluctuate individually or simultaneously, and a fluctuation pattern is diverse regardless of only a natural disaster pattern.

In addition, in the plague pattern of the example of FIG. 3, SC1 and SC5 are designated as the affected base, and the fluctuation range of the number of maintenance staffs is designated as -20 to 0. This is a condition setting assuming a state in which up to 20 persons become unable to execute a task at each of the service bases of SC1 and SC5 due to the plague.

In a cyberattack pattern, the A site and the B site are designated as the affected sites, SC1 and SC5 are designated as the affected bases, and a predictive diagnosis system is designated as the stop system. This is a condition setting assuming a state in which the predictive diagnosis systems for the assets at the A site and the B site are stopped due to the cyberattack and an access to information is not possible at the service bases of SC1 and SC5.

Multiple fluctuation conditions can be generated by causing the condition parameters of the various fluctuation patterns described above to independently fluctuate. By adding these multiple fluctuation conditions to the task scenario generated by the scenario generation unit 101, a plurality of task scenarios to which various fluctuations are added are generated.

Then, the generated task scenario is input to the model generation unit 103, and various models for operating the simulation unit 104 are generated. In the case of simulation for a maintenance task as a target, a worker model, an asset model, a task process model including a task, an IT system model, and the like are generated.

The simulation unit 104 simulates the maintenance task by using the generated various models. The simulation unit 104 is preferably an execution entity of a simulation step. Note that a model is generated for each of a plurality of task scenarios to which the above-described various fluctuations are applied, and each of the task scenarios is simulated.

A simulation method performed by the simulation unit 104 can be implemented by, for example, agent simulation.

In the agent simulation, data of an asset corresponding to a simulation world is generated for each individual in each management unit such as an asset in the real world or a component of the asset, and the data autonomously operates or fails to reproduce the behavior of the asset in the real world. The data generated at this time is referred to as an agent, and in the case of an asset, the data is referred to as an asset agent.

Similarly, regarding the maintenance staff, an agent is also generated in the simulation world one by one, and the agent is referred to as a maintenance staff agent. Such an agent performs an operation such as standby, movement, task execution, and rest in response to a work instruction.

Furthermore, agents corresponding to characters in the real world, such as an operation agent that makes a failure handling request at the time of an operation for an asset operation or an occurrence of a problem, and an assigned agent that assigns work to a maintenance staff, are generated.

At the start of the simulation, each agent is generated according to the input scenario, each agent autonomously operates with the elapse of the simulation time, and the operation of each agent is recorded as simulation log data. For example, in the asset agent, an operation start time, an operation end time, a failure time, a time of repair and recovery, an inspection time, and the like are recorded as asset operation logs for each asset individual. In addition, in the maintenance staff agent, a work start time, a work end time, a work content, a work time, and the like are recorded as maintenance staff work logs for each maintenance staff. These pieces of log data are output as the result of the simulation unit 104.

Note that the simulation method is not limited to the agent simulation, and for example, a causal loop diagram (LCD), a machine learning model, or the like may be used.

The simulation result for each task scenario obtained by the simulation unit 104 is input to the KPI calculation unit 106.

The KPI calculation unit 106 is a unit that calculates a KPI designated in advance by the KPI setting unit 105, based on the result of the simulation. The KPI calculated by the KPI calculation unit 106 is input to the sensitivity evaluation unit 107. The KPI calculation unit 106 is preferably an execution entity of an evaluation index calculation step.

FIG. 4 is an example of a KPI setting screen constituting the KPI setting unit 105. In the example of FIG. 4, KPI items include items of an asset operation rate, a CO₂ emission amount, a response time, a plan cost, a maintenance cost, a labor cost, overtime hours, work efficiency, and total work man-hours.

For example, the asset operation rate can be calculated by statistically analyzing the asset operation logs that are the simulation result. The overtime hours can be calculated by statistically analyzing the maintenance staff work logs which are the simulation result. In the embodiment of FIG. 1, a plurality of KPIs can be selected. In the example of FIG. 3, three items of the asset operation rate, the plan cost, and the overtime hours are selected. In this case, three KPIs (KPI1, KPI2, KPI3) are calculated for each simulated task scenario.

The sensitivity evaluation unit 107 compares the KPI for the task scenario generated by the scenario generation unit 101 with the KPI for the task scenario when the condition parameter of the simulation designated by the sensitivity parameter setting unit 102 is caused to fluctuate, and calculates the change amount of the KPI. The sensitivity evaluation unit 107 is preferably an execution entity of a presentation step.

Here, in the present invention, it is assumed that the change amount of the KPI at the time of the condition parameter fluctuation is referred to as a KPI sensitivity. As described above, since the fluctuation of the condition parameter set by the sensitivity parameter setting unit 102 may have a plurality of various patterns, there is a task scenario in which a plurality of fluctuations is added to one task scenario generated by the scenario generation unit 101. Therefore, a plurality of KPI sensitivities according to the fluctuation pattern of the condition parameter is calculated for the KPI of one task scenario. In addition, when a plurality of KPIs are designated, there are a plurality of KPIs for one task scenario, and a plurality of KPI sensitivities are calculated for the plurality of KPIs, respectively.

Data of the task scenario, the KPI for each task scenario, and the KPI sensitivity for each task scenario, which is generated in the above-described process, is recorded in the data storage unit 108. Since the scenario generation unit 101 creates a plurality of task scenarios from the assumed task plan scenario pattern, the data storage unit 108 stores a set of the KPI and the KPI sensitivity for each of the plurality of task scenarios.

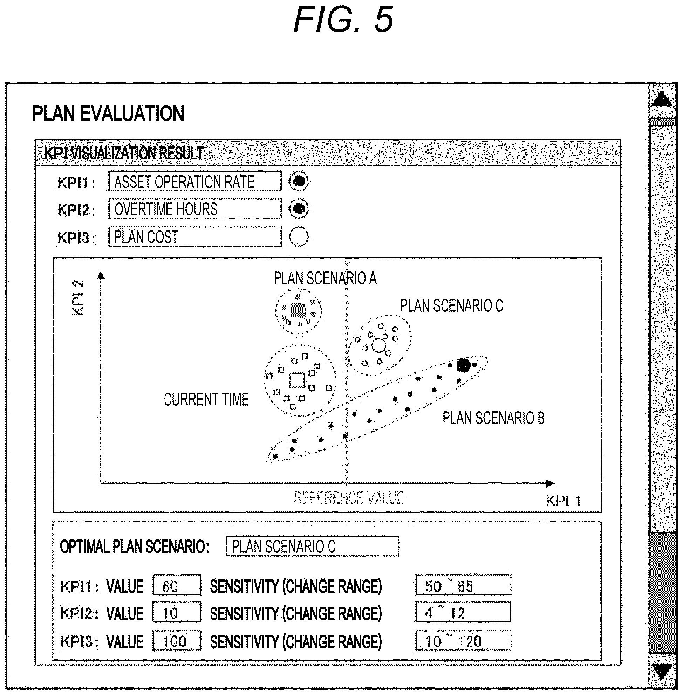

In addition, the data for each task scenario stored in the data storage unit 108 is input to the display unit 109, and the display unit 109 displays the input data for each task scenario on a screen. FIG. 5 is an example of an output screen of a result obtained by evaluating the task scenario.

In the upper part of the screen of FIG. 5, a KPI set as an output target is selected. In this example, the asset operation rate of KPI1 and the overtime hours of KPI2 are selected. In the middle part of the screen, the KPI evaluation result of each task plan scenario is displayed as a graph with KPI1 and KPI2 as axes. The horizontal axis indicates the value of the asset operation rate which is KPI1, and the vertical axis indicates the value of the overtime hours which is KPI2.

On the output screen of the result obtained by evaluating the task scenario as illustrated in FIG. 5, it is desirable that markers of different types (shape, color) are plotted for each task plan.

FIG. 5 illustrates not only the results of the plan scenarios A, B, and C, but also the results of the current task state in which no plan is taken.

In addition, as the result of each task plan scenario, the plot without condition parameter fluctuation is displayed large, and the result of sensitivity evaluation by causing the condition parameter to fluctuate is displayed small with the same type of marker. As a result, in each task plan scenario, it is possible to visualize the KPI change width when various condition parameters fluctuate. In FIG. 5, the fluctuation range of each task scenario is surrounded by a broken line.

Furthermore, in the lower part of FIG. 5, the value of each KPI and the sensitivity (change range) of each KPI in the plan scenario C determined as the best plan are indicated by numerical values.

In the example of FIG. 5, with respect to the current time, the plan scenario A has an effect of improving KPI2, the plan scenario B has an effect of largely improving KPI 1, and the plan scenario C has an effect of improving KPI1 and KPI2. At this time, when KPI1 is emphasized, the plan scenario B for improving KPI1 to the maximum tends to be selected as the best plan.

However, the plan scenario B has a large fluctuation range at the time of the condition parameter fluctuation, and there is a case where KPI1 and KPI2 become equal to or less than the current state depending on conditions. As illustrated in FIG. 3, in Embodiment 1, the condition parameter fluctuation assuming natural disasters, diseases, and cyberattacks is set as the sensitivity parameter fluctuation pattern. Therefore, it can be said that the plan scenario B is a non-resilient task plan having low robustness against natural disasters, diseases, and cyberattacks.

On the other hand, it can be said that, in the plan scenario A and the plan scenario C, the fluctuation range is smaller than the current state, and the plan scenario A and the plan scenario C are the resilient task plans. As a result, it can be seen that the plan scenario C is a plan having high robustness against fluctuations while improving KPI1 and KPI2. When resilience is also taken into consideration, the plan scenario C can be determined as the best plan.

Next, the effects of the present embodiment will be described.

The task design assistance system 100 described above according to Embodiment 1 of the present invention includes the task plan scenario setting unit 101b that generates the scenario indicating the content of the task plan, the simulation unit 104 that simulates the scenario, the KPI calculation unit 106 that calculates the evaluation index based on the result of the simulation, and the sensitivity evaluation unit 107 that calculates the sensitivity of the evaluation index when the condition parameter of the simulation is changed. The evaluation index and the sensitivity for the scenario are presented.

As a result, it is possible to select a robust task plan that has robustness against various environmental changes.

In addition, there are a plurality of evaluation indexes, and the sensitivity evaluation unit 107 calculates the sensitivity when the condition parameter is changed for each of the plurality of evaluation indexes, and presents the plurality of evaluation indexes and the sensitivity. Thus, it is possible to consider various evaluation indexes in a balanced manner. In this state, even when the task environment changes and the evaluation index to be emphasized changes in the future, it is possible to quickly make a decision to change plans. For example, in the example of FIG. 5, it is possible to obtain effects in which, although KPI1 is emphasized at the present time, when KPI2 suddenly becomes important, it is possible to immediately select the plan scenario A effective for improving KPI2.

### <Embodiment 2>

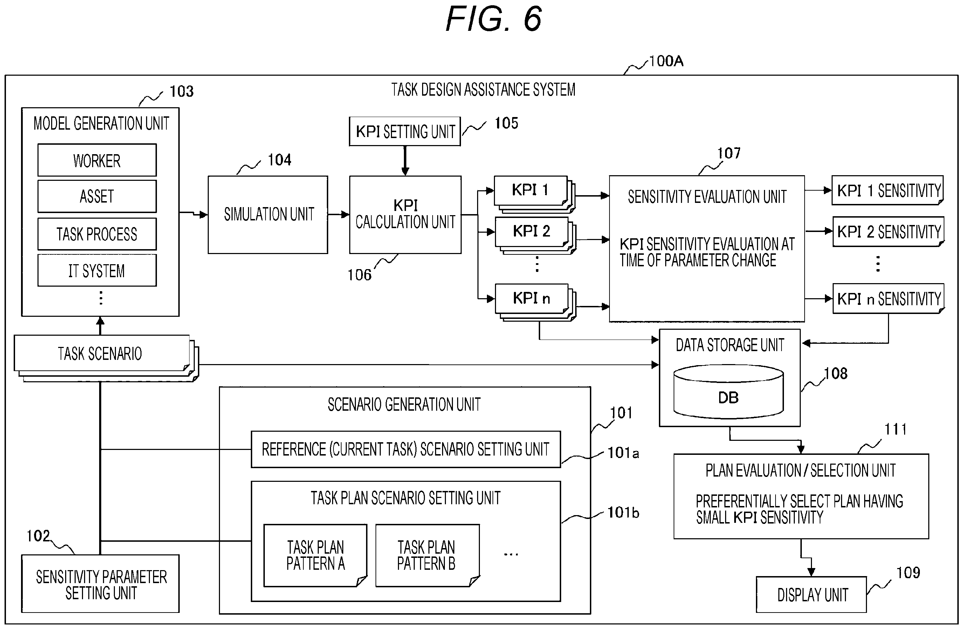

A task design assistance system and a task design assistance method according to Embodiment 2 of the present invention will be described with reference to FIG. 6. FIG. 6 is a functional block diagram of the task design assistance system according to Embodiment 2.

In a task design assistance system 100A in the present embodiment illustrated in FIG. 6, a plan evaluation/selection unit 111 is added to the task design assistance system 100 in Embodiment 1 illustrated in FIG. 1.

The plan evaluation/selection unit 111 receives data for each of the plurality of task scenarios stored in the data storage unit 108, and compares and evaluates the KPI and the KPI sensitivity value for each task scenario, thereby selecting a favorable task scenario from the plurality of task scenarios. More specifically, it is possible to preferentially select and present a task plan with a low sensitivity among scenarios in which the evaluation index satisfies the reference value. The plan evaluation/selection unit 111 is preferably an execution entity of a plan evaluation/selection step.

As a criterion for evaluation/selection, firstly, a reference value of the KPI to be emphasized is set, and a task scenario satisfying the KPI reference value is extracted. When there are a plurality of extracted task scenarios, KPI sensitivities of the respective task scenarios are compared, and a task scenario having a low KPI sensitivity is preferentially selected. The data of the selected task scenario is transferred to and displayed on the display unit 109.

Other configurations and operations are substantially the same as the configurations and operations of the task design assistance system and the task design assistance method in Embodiment 1 described above, and details will be omitted.

Also in the task design assistance system and the task design assistance method according to Embodiment 2 of the present invention, effects substantially similar to those of the task design assistance system and the task design assistance method in Embodiment 1 described above can be obtained.

In addition, by further including the plan evaluation/selection unit 111 that preferentially selects and presents the task plan with a low sensitivity among the scenarios in which the evaluation index satisfies the reference value, it is possible to preferentially select the plan with high robustness in which the KPI to be emphasized with respect to the fluctuation of the condition parameter is less likely to fluctuate from the task plans in which the KPI to be emphasized satisfies the reference value, and it is possible to automatically select the resilient task plan.

### <Embodiment 3>

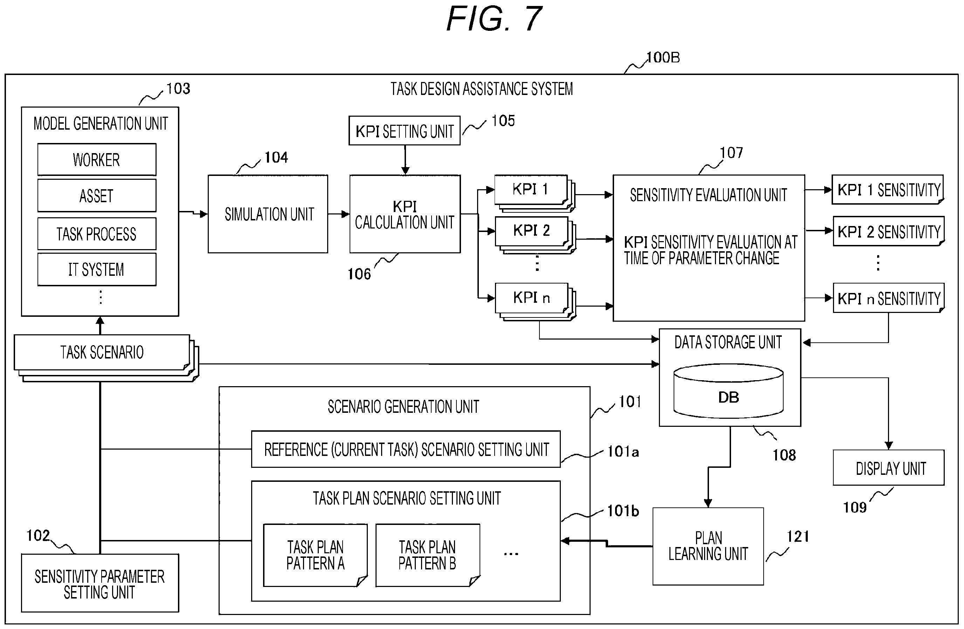

A task design assistance system and a task design assistance method according to Embodiment 3 of the present invention will be described with reference to FIG. 7. FIG. 7 is a functional block diagram of the task design assistance system according to Embodiment 3.

In a task design assistance system 100B in the present embodiment illustrated in FIG. 7, a plan learning unit 121 is added to the task design assistance system 100 in Embodiment 1.

The plan learning unit 121 is a unit that learns the relationship between the condition parameter of the scenario, the evaluation index, and the sensitivity. The data for each of the plurality of task scenarios stored in the data storage unit 108 is input. The plan learning unit 121 is preferably an execution entity of a plan learning step.

The plan learning unit 121 learns a relationship between various conditions (information of personnel and organizations who execute tasks, information of assets related to tasks, information of a system that constructs tasks, information of task processes related to task execution rules, and the like) of the task scenario and KPI and KPI sensitivity under the conditions of the task scenario. A machine learning model such as multiple regression analysis or deep learning can be used for learning.

The plan learning unit 121 estimates the task plan scenario in which the KPI designated by the KPI setting unit 105 has a favorable value from the learning model, and presents the estimated task plan scenario to the task plan scenario setting unit 101b of the scenario generation unit 101, so that it is possible to support the selection of a favorable task plan candidate. Similarly, the plan learning unit 121 estimates the task plan scenario in which the sensitivity of the KPI designated by the KPI setting unit 105 becomes a small value from the learning model, so that it is possible to support selection of a task plan candidate that is robust against the condition parameter fluctuation and is resilient.

Note that the data storage unit 108 may store data under various conditions regardless of the industry type or field. For example, a simulation result for the maintenance task of a windmill and a simulation result for a maintenance task of a railway vehicle may be stored at the same time. By accumulating multiple simulation results in the data storage unit 108, it is possible to learn the relationship between various KPIs and KPI sensitivities under various conditions, and it is possible to obtain a general-purpose system that is not limited to the industry type and the field.

Other configurations and operations are substantially the same as the configurations and operations of the task design assistance system and the task design assistance method in Embodiment 1 described above, and details will be omitted.

Also in the task design assistance system and the task design assistance method according to Embodiment 3 of the present invention, effects substantially similar to those of the task design assistance system and the task design assistance method in Embodiment 1 described above can be obtained.

In addition, by further including the plan learning unit 121 that learns the relationship between the condition parameter of the scenario, the evaluation index, and the sensitivity, it is possible to efficiently select a favorable task plan having a high task improvement effect for the designated KPI among a large number of task plan scenarios.

Note that the plan learning unit 121 in the present embodiment is also applicable to the task design assistance system 100A described in Embodiment 2.

### <Embodiment 4>

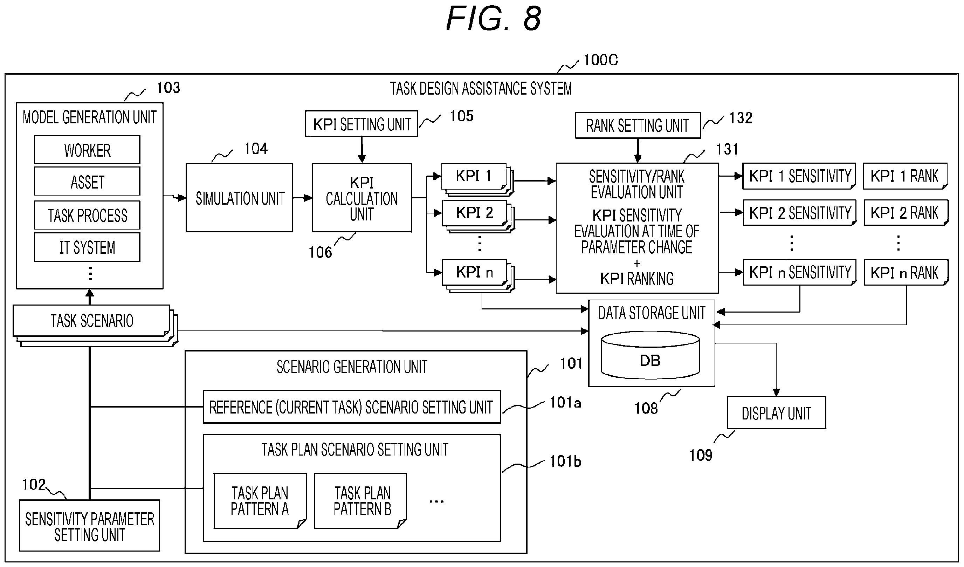

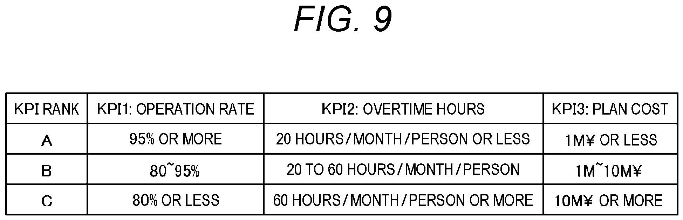

A task design assistance system and a task design assistance method according to Embodiment 4 of the present invention will be described with reference to FIGS 8 and 9. FIG. 8 is a functional block diagram of the task design assistance system according to Embodiment 4, and FIG. 9 is an example of a KPI rank setting screen.

In a task design assistance system 100C in the present embodiment illustrated in FIG. 8, the sensitivity evaluation unit 107 in the task design assistance system 100 in Embodiment 1 in FIG. 1 is changed to a sensitivity/rank evaluation unit 131, and a rank setting unit 132 is added.

The rank setting unit 132 sets a KPI rank according to the value for each KPI. The sensitivity/rank evaluation unit 131 receives the KPI for each task scenario calculated by the KPI calculation unit 106, calculates the KPI sensitivity when the condition parameter fluctuates, and ranks the KPI for each KPI according to the rank (reference value) set by the rank setting unit 132. The KPI sensitivity and the KPI rank for each task scenario calculated by the sensitivity/rank evaluation unit 131 are stored in the data storage unit 108 as a set of the task scenario and the KPI.

FIG. 9 is an example of KPI rank setting. As the reference value of the rank setting, for example, a guarantee value of a maintenance contract, a regulation value based on laws and regulations, an internal reference, and a minimum reference based on social requirements can be used. In the example of FIG. 9, a range in which achievement is desired is set as A rank, a range that can be allowed in accordance with social requirements is set as B rank, and a range outside the allowable range is set as C rank.

Other configurations and operations are substantially the same as the configurations and operations of the task design assistance system and the task design assistance method in Embodiment 1 described above, and details will be omitted.

Also in the task design assistance system and the task design assistance method according to Embodiment 4 of the present invention, effects substantially similar to those of the task design assistance system and the task design assistance method in Embodiment 1 described above can be obtained.

In addition, the sensitivity/rank evaluation unit 131 ranks the evaluation index based on the designated reference value, and presents the ranks together with the evaluation index and the sensitivity, whereby each task plan scenario set by the scenario generation unit 101 can be evaluated in a rank according to the reference value such as the regulation value or the guarantee value. Thus, the evaluation index is simplified, and it is easy to determine whether the task plan is good or bad.

Note that the sensitivity/rank evaluation unit 131 in the present embodiment can also be applied to the task design assistance system 100A described in Embodiment 2, the task design assistance system 100B described in Embodiment 3, and a task design assistance system obtained by combining the configuration in Embodiment 3 with the configuration in Embodiment 2.

### <Others>

Note that the present invention is not limited to the above embodiments, and various modification examples may be provided. For example, the above embodiments are described in detail in order to explain the present invention in an easy-to-understand manner, and the above embodiments are not necessarily limited to a case including all the described configurations.

Further, some components in one embodiment can be replaced with the components in another embodiment, and the configuration of another embodiment can be added to the configuration of one embodiment. Regarding some components in the embodiments, other components can be added, deleted, and replaced.

### Reference Signs List

- 100, 100A, 100B, 100C: task design assistance system
- 101: scenario generation unit
- 101a: reference scenario setting unit
- 101b: task plan scenario setting unit
- 102: sensitivity parameter setting unit
- 103: model generation unit
- 104: simulation unit
- 105: KPI setting unit
- 106: KPI calculation unit
- 107: sensitivity evaluation unit
- 108: data storage unit
- 109: display unit
- 111: plan evaluation/selection unit
- 121: plan learning unit
- 131: sensitivity/rank evaluation unit (sensitivity evaluation unit)
- 132: rank setting unit

## Claims

1. A task design assistance system comprising:
a task plan scenario setting unit that generates a scenario indicating a content of a task plan;
a simulation unit that simulates the scenario;
an evaluation index calculation unit that calculates an evaluation index based on a result of the simulation; and
a sensitivity evaluation unit that calculates a sensitivity of the evaluation index when a condition parameter of the simulation is changed, wherein the evaluation index and the sensitivity for the scenario are presented.

2. The task design assistance system according to claim 1, wherein
a plurality of the evaluation indexes are provided, and
the sensitivity evaluation unit calculates the sensitivity when the condition parameter is changed for each of the plurality of the evaluation indexes, and presents the plurality of evaluation indexes and the sensitivity.

3. The task design assistance system according to claim 1, further comprising a plan evaluation/selection unit that preferentially selects and presents a task plan with a low sensitivity among the scenarios in which the evaluation index satisfies a reference value.

4. The task design assistance system according to claim 1, further comprising a plan learning unit that learns a relationship between a condition parameter of the scenario, the evaluation index, and the sensitivity.

5. The task design assistance system according to claim 1, wherein the sensitivity evaluation unit ranks the evaluation index based on a designated reference value, and presents a rank together with the evaluation index and the sensitivity.

6. A task design assistance method comprising:
a task plan scenario setting step of generating a scenario indicating a content of a task plan;
a simulation step of simulating the scenario generated in the task plan scenario setting step; and
an evaluation index calculation step of calculating an evaluation index based on a result of a previous simulation;
a sensitivity evaluation step of calculating a sensitivity of the evaluation index when a condition parameter of the simulation is changed; and
a presentation step of presenting the evaluation index and the sensitivity for the scenario.

7. The task design assistance method according to claim 6, wherein
a plurality of the evaluation indexes are provided, and
in the sensitivity evaluation step, the sensitivity when the condition parameter is changed is calculated for each of the plurality of evaluation indexes, and the plurality of evaluation indexes and the sensitivity are presented.

8. The task design assistance method according to claim 6, further comprising a plan evaluation/selection step of preferentially selecting and presenting a task plan with a low sensitivity among the scenarios in which the evaluation index satisfies a reference value.

9. The task design assistance method according to claim 6, further comprising a plan learning step of learning a relationship between a condition parameter of the scenario, the evaluation index, and the sensitivity.

10. The task design assistance method according to claim 6, wherein, in the sensitivity evaluation step, the evaluation index is ranked based on a designated reference value, and a rank is presented together with the evaluation index and the sensitivity.
